# FASCICULE DE BREVET EUROPEEN

(11) **EP 3 910 249 B1**
(45) Date de publication et mention de la délivrance du brevet: **12.07.2023**
(21) Numéro de dépôt: 21172993.4
(22) Date de dépôt: 10.05.2021
(51) Int. Cl.: F24D 10/00, F24D 11/00, F24D 19/10, F24F 5/00, F24F 140/20

(54) **SYSTÈME DE PRODUCTION ET DE DISTRIBUTION DE CHALEUR ET DE FROID ET SON PROCÉDÉ DE GESTION**
SYSTEM ZUR ERZEUGUNG UND VERTEILUNG VON WÄRME UND KÄLTE UND SEIN STEUERUNGSVERFAHREN
SYSTEM FOR PRODUCING AND DISTRIBUTING HEAT AND COLD AND METHOD FOR MANAGING SAME

(30) Priorité: 13.05.2020 FR 2004721
(43) Date de publication de la demande: 17.11.2021
(73) Titulaire: Commissariat à l'Energie Atomique et aux Energies Alternatives, 75015 Paris (FR)
(72) Inventeur: DUMOULIN, Pierre, 38054 GRENOBLE (FR); PHAN, Hai Trieu, 38054 GRENOBLE (FR)
(74) Mandataire: Hautier IP

(56) Documents cités:
- EP-A1- 2 592 358
- EP-A1- 2 762 789
- EP-A1- 3 489 588
- EP-A1- 3 540 324
- EP-A2- 2 375 175
- WO-A2-2010/099793
- WO-A2-2011/023193
- GB-A- 2 451 019

## Description

### DOMAINE TECHNIQUE

La présente invention concerne un système de production et de distribution de chaleur et de froid. Elle trouve pour application particulièrement avantageuse lors de la mise en place de réseaux de chaleur et de froid.

### ÉTAT DE LA TECHNIQUE

Un réseau de chaleur ou de froid urbain est un ensemble d'installations qui produisent et distribuent de la chaleur, ou du froid, à plusieurs bâtiments pour le chauffage et/ou l'eau chaude sanitaire, ou la climatisation.

Un réseau de chaleur comprend une unité de production de chaleur et un réseau de distribution primaire de canalisation transportant la chaleur et la distribuant aux sous-stations, également dénommés postes de livraison aux utilisateurs.

Sur le même principe, les réseaux de froid transportent de l'eau glacée pour la climatisation des locaux et/ou pour le refroidissement d'applications.

La chaleur peut être produite à partir de différentes sources d'énergie et de différentes technologies, fossiles, biomasse, géothermie, énergies de récupération, telles que la chaleur fatale.

Formant une boucle fermée, le réseau de distribution primaire est composé de canalisations dans lesquelles la chaleur est transportée par un fluide caloporteur depuis l'unité de production de chaleur jusqu'à la sous-station d'échange. Un circuit aller transporte le fluide caloporteur chaud issu de l'unité de production. Un circuit retour rapporte le fluide caloporteur, qui s'est délesté de ses calories au niveau de la sous-station d'échange. Le fluide est alors à nouveau chauffé par l'unité de production de chaleur puis renvoyé dans le circuit.

Dans le cas d'un réseau de froid, le fluide caloporteur cède une partie de son énergie frigorifique aux installations de l'immeuble, puis le fluide caloporteur réchauffé est ramené vers les centrales de production grâce à une autre canalisation. Les réseaux de froid ou de chaud fonctionnent en circuit fermé et comprennent, donc toujours au moins deux canalisations.

Les sous-stations d'échange, classiquement disposées aux pieds des immeubles comprennent classiquement au moins un échangeur thermique qui permet le transfert de la chaleur entre le réseau de distribution primaire et le réseau de distribution de l'immeuble ou sous-groupe d'immeuble.

Les réseaux de chaleur se développent de plus en plus et commencent à bien s'établir avec des sources de chaleur variées notamment issues de la chaleur fatale. Les réseaux de chaleur permettent la fourniture de chaleur pour le chauffage et pour l'eau chaude sanitaire.

En parallèle, des développements se poursuivent pour répondre au besoin de rafraichissement des habitations, et plus largement des bâtiments, en constante augmentation. Pour cela, le recours aux réseaux de froid est étudié.

Actuellement, les réseaux de froid et de chaleur sont disposés en parallèles impliquant des circuits indépendants pour le réseau de froid et le réseau de chaleur. Il y a donc classiquement deux circuits primaires de distribution disposés en parallèle multipliant les canalisations. Cette difficulté est d'autant plus gênante lorsqu'un réseau de froid doit être ajouté à un réseau de chaleur existant. Dans ce cas-là, il est nécessaire de réaliser des nouvelles tranchées, d'installer des nouvelles canalisations ce qui augmente les coûts et pose de nombreux problèmes lors des travaux et d'encombrement de l'espace.

On connait du document EP 2 762 789 A1 une installation avec de multiples sources de chaleur intégrées. On connait du document EP 3 489 588 A1 un système de chauffage d'eau sanitaire et on connait par ailleurs, du document WO 2011/023193 A2 un système de stockage de la chaleur.

Un objet de la présente invention est donc de proposer une solution qui réponde au besoin en chaleur, en rafraichissement et en eau chaude sanitaire de plusieurs immeubles tout en levant au moins certain desdits inconvénients cités.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, l'invention prévoit un système de production de chaleur et de froid configuré pour assurer alternativement la production de froid, la production de chaleur et la production d'eau chaude sanitaire comprenant un réseau primaire comprenant : un dispositif de production de froid, un dispositif de production de chaleur, un circuit fluidique primaire apte à recevoir un fluide caloporteur, avantageusement de l'eau, un module d'eau chaude sanitaire (ECS), un module d'échange thermique *comprenant* avantageusement au moins un échangeur thermique assurant le transfert thermique entre un émetteur et le fluide caloporteur apte à circuler dans le réseau primaire. Le circuit fluidique primaire est configuré pour relier fluidiquement, avantageusement en série le dispositif de production de froid, le dispositif de production de chaleur, le module d'eau chaude sanitaire et le module d'échange thermique, et le réseau primaire comprend un dispositif de stockage du fluide caloporteur du circuit fluidique primaire agencé en dérivation sur le circuit fluidique primaire et configuré pour stocker le fluide caloporteur, avantageusement le fluide caloporteur chaud ou le fluide caloporteur froid, du circuit fluidique primaire lors d'une transition entre la production d'eau chaude sanitaire et la production de froid ou de chaleur.

Le système selon l'invention permet avec un seul et même système et donc un seul circuit fluidique primaire d'assurer un rafraichissement et la production d'eau chaude sanitaire, mais également le chauffage. Le système limite donc les canalisations, les coûts et l'espace occupé au sol. De plus, le dispositif de stockage limite les pertes énergétiques qui pourraient se produire lors du passage d'un mode de fonctionnement à l'autre ce qui permet d'avoir un système qui limite la consommation d'énergie.

Un autre aspect concerne un procédé de gestion d'un système tel que décrit ci-dessus comprenant les modes de fonctionnement suivants :
- un mode de production de froid configuré pour fournir un fluide caloporteur froid au module d'échange thermique assurant un rafraichissement de l'émetteur,
- un mode de production d'eau chaude sanitaire configuré pour fournir un fluide caloporteur chaud au module d'eau chaude sanitaire,
- un mode de production de chaleur configuré pour fournir un fluide caloporteur chaud au module d'échange thermique assurant un chauffage de l'émetteur.

Le procédé de gestion comprend :
- une phase de transition entre le mode de production de froid et le mode de production d'eau chaude sanitaire comprenant le stockage du fluide caloporteur froid circulant dans le circuit fluidique primaire dans le dispositif de stockage et le déstockage du fluide caloporteur stocké dans le dispositif de stockage de température supérieure à celle du fluide de caloporteur en cours de stockage dans le dispositif de stockage, et
- une phase de transition entre le mode de production d'eau chaude sanitaire et le mode de production de froid comprenant le stockage du fluide caloporteur chaud circulant dans le circuit fluidique primaire dans le dispositif de stockage et le déstockage du fluide caloporteur froid stocké dans le dispositif de stockage.

Cela permet de ne pas perdre les frigories ou calories du système lors d'un changement de mode de fonctionnement.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma d'un système selon l'invention assurant le chauffage et le rafraichissement de deux immeubles ou groupes d'immeubles.
La figure 2 représente le système selon l'invention en mode de fonctionnement de production de froid.
La figure 3 représente le système selon l'invention en phase de transition entre le mode de production de froid illustré à la figure 2 et le mode de production d'eau chaude sanitaire illustré en figure 4.
La figure 4 représente le système selon l'invention en mode de production d'eau chaude sanitaire
La figure 5 représente le système selon l'invention en phase de transition entre le mode de production d'eau chaude sanitaire illustré en figure 4 et le mode de production de froid illustré à la figure 2.
La figure 6 représente le système selon l'invention en mode de production de chaleur.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Avantageusement, le dispositif de stockage 7 est un ballon de stockage thermique thermocline.

Le stockage thermocline permet d'assurer un stockage de chaleur sous forme sensible stratifié naturellement en température. Une zone chaude et une zone froide cohabitent dans le même réservoir. Elles sont séparées par une zone de gradient thermique appelée thermocline.

Selon un exemple, le dispositif de stockage 7 comprend une entrée de fluide caloporteur chaud en partie supérieure du ballon de stockage, une entrée de fluide caloporteur froid en partie inférieure du ballon de stockage, une sortie de fluide caloporteur chaud en partie supérieure du ballon de stockage, une sortie de fluide caloporteur froid en partie inférieure.

Cette disposition permet d'assurer le maintien de la thermocline et donc un stockage optimal de la chaleur sensible, limitant les déperditions.

Selon un exemple, le dispositif de stockage 7 est configuré pour permettre le stockage du volume du circuit fluidique primaire.

Le dispositif de stockage 7 permet ainsi de stocker le fluide de stockage en circulation dans le circuit fluidique primaire. Lors du changement de mode de fonctionnement, le fluide caloporteur circulant dans le circuit fluidique primaire est stocké dans le dispositif de stockage 7 thermique, et avantageusement un fluide caloporteur stocké dans le dispositif de stockage 7 est avantageusement déstocké du dispositif de stockage 7. Le volume du dispositif de stockage 7 est au moins équivalent au volume du circuit fluidique primaire, plus précisément au volume des canalisations du circuit fluidique primaire.

Selon un exemple, le dispositif de stockage 7 comprend une branche de dérivation de prélèvement 8 du fluide caloporteur agencée sur le circuit fluidique fluidique primaire, préférentiellement entre le circuit fluidique primaire et le ballon de stockage et une branche de dérivation de distribution 9 du fluide caloporteur agencée sur le circuit fluidique en aval de la branche de dérivation de prélèvement 8, préférentiellement entre le ballon de stockage et le circuit fluidique primaire.

Le dispositif de stockage est configuré pour assurer le stockage et le déstockage du fluide caloporteur et avantageusement simultanément.

Selon un exemple, le dispositif de production de froid 1 est configuré pour être réversible de sorte à produire de la chaleur. Le dispositif de production de froid 1 et le dispositif de production de chaleur 2 sont avantageusement le même dispositif.

Selon un autre exemple, le dispositif de production de chaleur 2 est indépendant du dispositif de production de froid 1 et peut être par exemple une chaudière. Cette disposition est avantageuse notamment lorsque le réseau de froid est rajouté à un réseau de chaleur existant, il est alors rajouté un dispositif de production de froid 1 relié fluidiquement au circuit fluidique primaire existant du réseau de chaleur et un dispositif de stockage 7 du fluide caloporteur est rajouté en dérivation du circuit fluidique. Le dispositif de production de froid 1 réversible assurant également de la chaleur est par exemple une machine à absorption ou à compression mécanique de vapeur.

Selon un exemple, le circuit de fluidique comprend au moins une canalisation aller 10 configurée pour transporter le fluide caloporteur depuis le dispositif de production de froid et/ou de chaleur vers le module d'eau chaude sanitaire 3 et/ou vers le module d'échange thermique 6 et au moins une canalisation retour 11 configurée pour transporter le fluide caloporteur depuis le module d'eau chaude sanitaire 3 et/ou depuis le module d'échange thermique 6 vers le dispositif de production de froid et/ou de chaleur, le dispositif de stockage 7 étant agencé avantageusement en dérivation d'une canalisation retour 11 du circuit de fluidique.

Cette disposition permet de stocker le fluide caloporteur après être passé dans le module d'échange thermique 6 ou dans le module de production d'eau chaude sanitaire 3, plus génériquement dans une sous-station 14, de sorte le fluide caloporteur stocké est moins riche en énergie limitant ainsi les pertes thermiques du fluide caloporteur dans le dispositif de stockage 7.

Selon un exemple, le module d'eau chaude sanitaire (ECS) 3, comprend un ballon d'eau chaude sanitaire 4 et un échangeur thermique 5 assurant le transfert thermique entre le fluide caloporteur circulant dans le circuit fluidique primaire et l'eau chaude sanitaire.

Selon un exemple, le dispositif comprend un module de gestion des flux du fluide caloporteur dans le réseau primaire.

Selon un exemple, le module de gestion comprend des vannes 15, 16, 17, 18, 19 agencées sur le réseau primaire, avantageusement des capteurs de températures configurés pour mesurer la température du fluide caloporteur dans le réseau primaire et avantageusement un module de temporisation configuré pour optimiser les transitions.

Selon un exemple, le procédé de gestion comprend :
- une phase de transition entre le mode de production de froid et le mode de production de chaleur comprenant le stockage du fluide caloporteur froid circulant dans le circuit fluidique primaire dans le dispositif de stockage 7 et le déstockage du fluide caloporteur stocké dans le dispositif de stockage 7 de température supérieure à celle du fluide de stockage en cours de stockage dans le dispositif de stockage 7, et
- une phase de transition entre le mode de production de chaleur et le mode de production de froid comprenant le stockage du fluide caloporteur chaud circulant dans le circuit fluidique primaire dans le dispositif de stockage 7 et le déstockage du fluide caloporteur froid stocké dans le dispositif de stockage 7.

Selon un exemple, le procédé de gestion comprend :
- une phase de transition entre le mode de production de chaleur et le mode de production d'eau chaude sanitaire 3 comprenant le stockage du fluide caloporteur chaud circulant dans le circuit fluidique primaire dans le dispositif de stockage 7 et le déstockage du fluide caloporteur stocké dans le dispositif de stockage 7 de température supérieure à celle du fluide de stockage en cours de stockage dans le dispositif de stockage 7, et
- une phase de transition entre le mode de production d'eau chaude sanitaire et le mode de production de chaleur comprenant le stockage du fluide caloporteur chaud circulant dans le circuit fluidique primaire dans le dispositif de stockage 7 et le déstockage du fluide caloporteur stocké dans le dispositif de stockage de température inférieure à celle du fluide de stockage 7 en cours de stockage dans le dispositif de stockage 7.

L'amont et l'aval en un point donné sont pris en référence au sens de circulation du fluide dans le circuit.

Pour la suite de la description, on entend par `haut' et `bas', ou leurs dérivés, une qualité de positionnement relatif d'un élément du système lorsque celui-ci est installé de façon fonctionnelle, le `haut' étant orienté à l'opposé du sol et le 'bas' étant orienté vers le sol. L'extrémité supérieure se situe en haut et l'extrémité inférieure se situe en bas.

La présente invention concerne un système de production de chaleur et de froid. Le système selon l'invention est un réseau de chaleur et de froid combiné. Le système selon l'invention est configuré pour produire de la chaleur et du froid alternativement. La chaleur est avantageusement destinée au chauffage d'un bâtiment et à l'eau chaude sanitaire. Le froid est avantageusement destiné au rafraichissement ou à la climatisation d'un bâtiment. Le système est avantageusement configuré pour la production alternative de froid et d'eau chaude sanitaire et préférentiellement également pour la production de chauffage et d'eau chaude sanitaire.

Le système selon l'invention est configuré pour prendre alternativement un mode de fonctionnement de production de chaleur ou un mode de fonctionnement de production de froid ou encore un mode de fonctionnement de production d'eau chaude sanitaire.

Le système selon l'invention comprend un réseau primaire. Avantageusement, le réseau primaire est apte à coopérer avec un réseau secondaire configuré pour distribuer la chaleur ou le froid à un utilisateur.

Le réseau primaire et le réseau secondaire coopèrent pour assurer un échange thermique au niveau de sous-station 14.

Le réseau primaire du système selon l'invention comprend un dispositif de production de froid 1 et un dispositif de production de chaleur 2.

Le dispositif de production de froid 1 est par exemple une machine à absorption ou une machine à compression mécanique destinée à produire du froid à partir d'une source de chaleur 22.

La source de chaleur 22 peut être variée telle que de l'eau d'une nappe phréatique ou de la chaleur fatale issue de procédés industriels ou plus simplement de l'air ambiant.

Le dispositif de production de chaleur 2 est une chaufferie fonctionnant à partir de diverses énergies pouvant être ou non utilisées simultanément, telles que le bois, le gaz, des énergies fossiles, de la chaleur fatale issue de procédés industriels. Cette disposition est avantageuse notamment lorsqu'un réseau de froid est rajouté à un réseau de chaleur existant, il est alors rajouté un dispositif de production de froid 1 relié fluidiquement au circuit fluidique existant du réseau de chaleur. Selon l'invention, un dispositif de stockage du fluide caloporteur est rajouté sur le réseau primaire, préférentiellement en dérivation d'un circuit fluidique primaire.

Selon un mode de réalisation, le dispositif de production de froid 1 est configuré pour être réversible de sorte à produire de la chaleur. Le dispositif de production de froid 1 réversible assurant également la production de chaleur 2 est par exemple une machine à absorption ou à compression mécanique de vapeur.

Le système selon l'invention comprend un circuit fluidique primaire apte à recevoir un fluide caloporteur. Le circuit fluidique primaire est avantageusement configuré pour assurer la circulation du fluide caloporteur entre le dispositif de production de chaleur 2 et/ou le dispositif de production de froid 1 et au moins une sous-station 14 assurant avantageusement la distribution de l'énergie thermique vers le réseau secondaire et un utilisateur.

Le fluide caloporteur est configuré pour permettre le transfert d'énergie thermique entre le dispositif de production de chaleur 2 et/ou le dispositif de production de froid 1 et une sous-station 14. À titre d'exemple préféré, le fluide caloporteur est de l'eau sous différents états selon les besoins tels que de l'eau chaude ou surchauffée pour le transfert de chaleur ou de l'eau glacée pour le transfert de froid. À titre d'exemple, l'eau glacée circulant dans le circuit fluidique primaire est à une température variant entre 3°C et 11 °C. En ce qui concerne, l'eau chaude ou l'eau surchauffée, celles-ci circulent dans le circuit fluidique primaire à des températures variant de 70° à 110°.

Le circuit fluidique primaire comprend avantageusement des canalisations aptes à recevoir le fluide caloporteur. Les canalisations sont à titre d'exemple en acier avec isolation thermique pouvant être de la mousse de polyuréthane. Les canalisations sont préférentiellement enterrées.

Selon une possibilité, le circuit fluidique primaire comprend au moins une canalisation aller 10 pour conduire le fluide caloporteur vers les sous-stations 14 et une canalisation retour 11 pour assurer le retour du fluide caloporteur vers le dispositif de production de chaleur 2 et/ou le dispositif de production de froid 1.

Avantageusement, le circuit fluidique primaire comprend au moins une pompe 12 pour assurer la circulation du fluide caloporteur dans les canalisations 10-11.

Le système selon l'invention comprend un module d'eau chaude sanitaire (ECS) 3. Le module d'eau chaude sanitaire 3 est configuré pour assurer l'échange thermique entre le fluide caloporteur du réseau primaire et l'eau chaude sanitaire. Selon un mode de réalisation, le module ECS 3 comprend un ballon d'eau chaude sanitaire 4 et un échangeur thermique 5. Préférentiellement le module ECS 3 comprend un circuit fluidique d'eau chaude sanitaire reliant fluidiquement l'échangeur thermique 5 et le ballon d'eau chaude sanitaire 4 et apte à recevoir de l'eau chaude sanitaire. Le module ECS 3 comprend avantageusement une pompe 13 configurée pour mettre en circulation l'eau chaude sanitaire, dans le circuit fluidique, entre l'échangeur thermique 5 et le ballon d'ECS 4. L'échangeur thermique 5 est à titre d'exemple un échangeur à tubes ou à plaques.

Le système selon l'invention comprend un module d'échange thermique 6. Le module d'échange thermique 6 assure le transfert thermique entre le réseau primaire et le réseau secondaire. Le module d'échange thermique 6 comprend au moins un échangeur thermique apte à assurer le transfert thermique entre le fluide caloporteur du réseau primaire et un fluide caloporteur du réseau secondaire avantageusement destiné aux utilisateurs. L'échangeur thermique est à titre d'exemple un échangeur à tubes ou à plaques. Le réseau secondaire comprend au moins un émetteur. L'émetteur est destiné à diffuser la chaleur ou le froid dans le bâtiment. L'émetteur est par exemple un appareil de climatisation, un radiateur ou un plancher chauffant.

Selon une possibilité, le module d'ECS 3 et le module d'échange thermique 6 forment une sous-station 14. Le système selon l'invention est avantageusement apte à assurer le transfert thermique entre un réseau primaire et plusieurs réseaux secondaires grâce à plusieurs sous-stations 14.

Selon un mode de réalisation, le circuit fluidique primaire est configuré pour assurer la connexion fluidique entre le dispositif de production de chaleur 2, le dispositif de production de froid 1 et au moins une sous-station, plus précisément un module d'ECS 3 et un module d'échange thermique 6.

Selon un mode de réalisation préféré de l'invention, le réseau primaire comprend un dispositif de stockage 7 du fluide caloporteur du circuit fluidique primaire. Avantageusement, le dispositif de stockage 7 est agencé en dérivation sur le circuit fluidique primaire.

Le dispositif de stockage 7 est un dispositif de stockage thermique et à titre d'exemple préféré un ballon de stockage du fluide caloporteur. Préférentiellement, le stockage du fluide caloporteur permet un stockage d'énergie thermique sensible préférentiellement avec thermocline. Le fluide caloporteur est ainsi stocké dans le dispositif de stockage avec un gradient de température naturel, le plus chaud en haut vers le plus froid en bas. Le fluide caloporteur stocké est stratifié selon un gradient de température. Le dispositif de stockage est configuré pour limiter les pertes thermiques du fluide de caloporteur stocké. Le dispositif de stockage, et notamment le ballon de stockage, est avantageusement isolé thermiquement de l'environnement extérieur.

Le dispositif de stockage 7 est avantageusement configuré pour stocker le fluide caloporteur du réseau primaire, plus précisément le fluide caloporteur en circulation dans le circuit fluidique primaire, lors de passage d'un mode de fonctionnement à l'autre.

Le dispositif de stockage 7 présente avantageusement un volume de stockage au moins égal au volume du circuit fluidique primaire de sorte à permettre le stockage de tout le fluide caloporteur circulant dans le circuit fluidique primaire. Le volume de fluide circulant dans le circuit fluidique primaire correspond au volume du circuit primaire lorsque toutes les canalisations reçoivent du fluide caloporteur ainsi que les dispositifs de production de froid 1, et de chaud 2, et les modules d'échange thermique 6 et de production d'eau chaude sanitaire 3. À titre d'exemple, pour un système comprenant 500m de canalisations d'un diamètre de 10cm, le dispositif de stockage doit être apte à stocker un volume de fluide caloporteur de 4m³.

Le dispositif de stockage 7 comprend avantageusement une entrée de fluide caloporteur chaud en partie supérieure du ballon de stockage, une entrée de fluide caloporteur froid en partie inférieure du ballon de stockage, une sortie de fluide caloporteur chaud en partie supérieure du ballon de stockage, une sortie de fluide caloporteur froid en partie inférieure. Ces différentes entrées et sorties sont utilisées en fonction des besoins pour conserver un stockage stratifié par thermocline du fluide caloporteur.

Selon un mode de réalisation, le dispositif de stockage 7 comprend une branche de dérivation de prélèvement 8 assurant la connexion fluidique entre le circuit fluidique primaire et le ballon de stockage 7 et une branche de dérivation de distribution 9 assurant la connexion fluidique entre le ballon de stockage 7 et le circuit fluidique primaire.

Selon une possibilité, le dispositif de stockage 7 est agencé en dérivation de la canalisation retour 11 du circuit fluidique primaire.

Selon une possibilité, la branche de dérivation de prélèvement 8 se connecte à la canalisation retour 11 par un piquage 20. La branche de dérivation de distribution 9 se connecte à la canalisation retour 11 par un piquage 21.

Lors du stockage du fluide caloporteur, le fluide caloporteur circulant dans la canalisation retour 11 est dérivé dans la branche de dérivation de prélèvement 8 en direction du dispositif de stockage et va rentrer dans le ballon par une entrée soit en partie inférieure soit en partie supérieure du ballon en fonction de sa température.

Lors du déstockage du fluide caloporteur, le fluide caloporteur stocké dans le ballon va être redistribué dans la canalisation retour 11 par branche de dérivation de distribution 9. Le fluide caloporteur va sortir du ballon par une sortie soit en partie inférieure soit en partie supérieure du ballon en fonction de sa température.

Le système comprend avantageusement un module de gestion des flux. Le module de gestion des flux est configuré pour contrôler la dérivation du fluide caloporteur vers le dispositif de stockage 7 et le déstockage du fluide caloporteur depuis le dispositif de stockage 7. À titre d'exemple, le module de gestion comprend au moins une vanne 15 agencée sur le circuit fluidique en aval d'un piquage 20 de la branche de dérivation de prélèvement 8. À titre d'exemple, le module de gestion comprend au moins une vanne 16 agencée sur la branche de dérivation de distribution 9 en amont d'un piquage 21 de ladite branche 9 sur le circuit fluidique primaire. Le contrôle de l'ouverture ou de la fermeture de la vanne 15 assure la dérivation ou non du fluide caloporteur vers le dispositif de stockage 7. Le contrôle de l'ouverture ou de la fermeture de la vanne 16 assure le déstockage ou non du fluide caloporteur depuis le dispositif de stockage 7.

Le module de gestion des flux comprend avantageusement des capteurs de températures destinés à mesurer la température du fluide caloporteur dans le réseau primaire notamment dans le dispositif de stockage, et préférentiellement également dans les sous-stations 14 et notamment la température du ballon d'eau chaude sanitaire 5.

Le module de gestion des flux comprend avantageusement un module de temporisation configuré pour temporiser les différents modes de fonctionnement et la transition d'un mode de fonctionnement à l'autre.

Le module de gestion des flux comprend avantageusement des vannes 15,16,17,18,19 commandées pour contrôler les flux du fluide caloporteur dans le réseau primaire.

La présente invention concerne également un procédé de gestion d'un système tel que décrit ci-dessus. Le procédé de gestion selon l'invention permet de gérer les différents modes de fonctionnement du système et le passage de l'un à l'autre en optimisant la consommation énergétique du système.

En fonctionnement, le système est configuré pour avoir au moins trois modes de fonctionnement.

Selon un mode de fonctionnement, le système assure la production de froid configurée pour fournir un fluide caloporteur froid au module d'échange thermique 6 assurant un rafraichissement de l'émetteur.

Selon un autre mode de fonctionnement, le système assure la production d'eau chaude sanitaire 3 configurée pour fournir un fluide caloporteur chaud au module d'eau chaude sanitaire.

Selon un autre mode de fonctionnement, le système assure la production de chaleur configurée pour fournir un fluide caloporteur chaud au module d'échange thermique 6 assurant un chauffage de l'émetteur.

Selon un mode de réalisation, le système comprend des phases de transition entre les modes de fonctionnement. Les phases de transitions permettent le passage d'un mode de fonctionnement à un autre et sont avantageusement transitoires.

Selon une possibilité, le système comprend une phase de transition entre le mode de production de froid et le mode de production d'eau chaude sanitaire. Cette phase de transition comprend le stockage du fluide caloporteur froid circulant dans le circuit fluidique primaire dans le dispositif de stockage 7. Avantageusement, cette phase de transition comprend le déstockage du fluide caloporteur stocké dans le dispositif de stockage 7 qui est préférentiellement de température supérieure à celle du fluide caloporteur en cours de stockage dans le dispositif de stockage 7.

Selon une possibilité, le système comprend une phase de transition entre le mode de production d'eau chaude sanitaire et le mode de production de froid. Cette phase de transition comprend le stockage du fluide caloporteur chaud circulant dans le circuit fluidique primaire dans le dispositif de stockage 7. Avantageusement, cette phase de transition comprend le déstockage du fluide caloporteur qui est préférentiellement plus froid que le fluide caloporteur stocké dans le dispositif de stockage 7.

Selon une possibilité, le système comprend une phase de transition entre le mode de production de froid et le mode de production de chaleur. Cette phase de transition comprend le stockage du fluide caloporteur froid circulant dans le circuit fluidique primaire dans le dispositif de stockage 7. Avantageusement, cette phase de transition comprend le déstockage du fluide caloporteur stocké dans le dispositif de stockage 7, préférentiellement de température supérieure à celle du fluide caloporteur en cours de stockage dans le dispositif de stockage 7.

Selon une possibilité, le système comprend une phase de transition entre le mode de production de chaleur et le mode de production de froid. Cette phase de transition comprend le stockage du fluide caloporteur chaud circulant dans le circuit fluidique primaire dans le dispositif de stockage 7. Avantageusement, cette phase de transition comprend le déstockage du fluide caloporteur qui est préférentiellement plus froid que le fluide caloporteur stocké dans le dispositif de stockage 7.

Selon une possibilité, le système comprend une phase de transition entre le mode de production de chaleur et le mode de production d'eau chaude sanitaire. Cette phase de transition comprend le stockage du fluide caloporteur chaud circulant dans le circuit fluidique primaire dans le dispositif de stockage 7. Avantageusement, cette phase de transition comprend le déstockage du fluide caloporteur stocké dans le dispositif de stockage 7 de température supérieure à celle du fluide caloporteur en cours de stockage dans le dispositif de stockage 7.

Selon une possibilité, le système comprend une phase de transition entre le mode de production d'eau chaude sanitaire et le mode de production de chaleur. Cette phase de transition comprend le stockage du fluide caloporteur chaud circulant dans le circuit fluidique primaire dans le dispositif de stockage 7. Avantageusement, cette phase de transition comprend le déstockage du fluide caloporteur stocké dans le dispositif de stockage 7 de température inférieure à celle du fluide caloporteur en cours de stockage dans le dispositif de stockage 7.

Selon un mode de réalisation, le stockage et le déstockage du fluide caloporteur dans le dispositif de stockage 7 sont simultanés de sorte à s'assurer que le circuit fluidique comprend toujours du fluide caloporteur et ne pas risquer de désamorcer les pompes 12, 13 et dispositifs du réseau primaire.

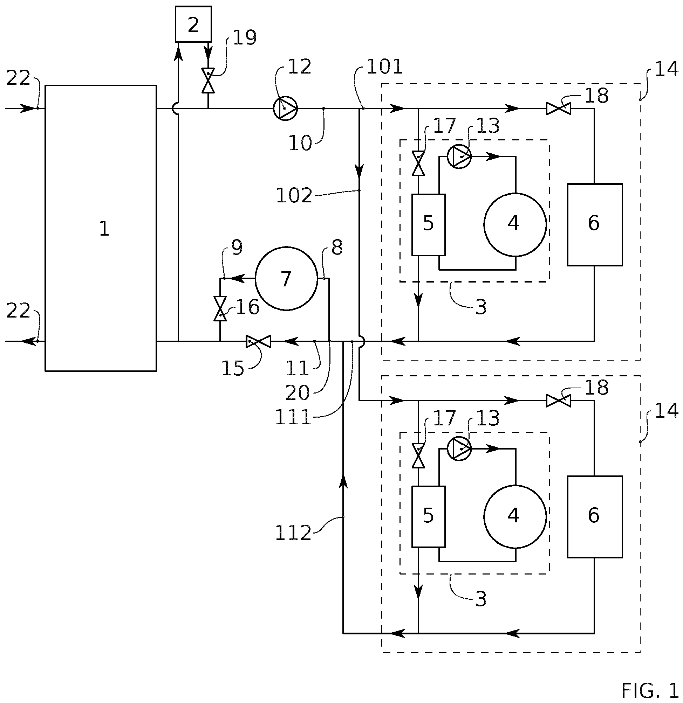

En figure 1, le système selon l'invention est représenté avec un deux sous-stations ou immeubles 14.

Le système selon la figure 1 comprend un dispositif de production de froid 1 pouvant éventuellement être réversible en dispositif de production de chaud 2.

Le dispositif de froid 1 est alimenté par une source de chaleur 22.

Le système comprend un circuit fluidique primaire reliant le dispositif de production de froid 1, le dispositif de production de chaleur 2, au moins une sous-station 14, plus précisément deux sous-stations 14 sont illustrées en figure 1, et un dispositif de stockage 7. Avantageusement, selon l'invention, le système comprend un dispositif de stockage centralisé pour le système et non pas un dispositif de stockage pour chaque sous-stations 14.

Le circuit fluidique primaire assure la connexion fluidique du dispositif de production de froid 1 à une sous-station 14 par une canalisation aller 10. Une pompe 12 est agencée sur la canalisation aller 10. La canalisation aller 10 comprend des canalisations aller de dérivation 101, 102 assurant les connexions fluidiques avec chaque sous-station 14.

Le circuit fluidique primaire assure la connexion fluidique des sous-stations 14 au dispositif de production de froid 1 par une canalisation retour 11. Avantageusement, le dispositif de stockage 7 est agencé sur la canalisation retour 11. La canalisation retour 11 comprend des canalisations retour de dérivation 111, 112 assurant les connexions fluidiques avec chaque sous-station 14.

Chaque sous-station 14 comprend un module d'eau chaude sanitaire 3 et un module d'échange thermique 6 agencé en parallèle sur le circuit fluidique primaire. La canalisation aller 10, plus précisément en figure 1 la canalisation 101, 102, débouche au module d'échange thermique 6 et la canalisation retour 11, plus précisément en figure 1 la canalisation 111,112, repart du module d'échange thermique 6. En parallèle, la canalisation aller 10, plus précisément en figure 1 la canalisation 101,102, débouche au module d'ECS 3 et la canalisation retour 11, plus précisément en figure 1 la canalisation 111,112, repart du module d'ECS 3.

La canalisation aller 10, plus précisément en figure 1 la canalisation 101, 102, débouche dans l'échangeur thermique 5 du module d'ECS 3 et la canalisation retour 11, plus précisément en figure 1 la canalisation 111,112, en repart.

Un circuit fluidique assure la connexion fluidique entre l'échangeur thermique 5 et le ballon d'eau chaude sanitaire 4. Une pompe 13 est avantageusement agencée sur le circuit fluidique, entre l'échangeur thermique 5 et le ballon d'ECS 4.

Le système comprend une branche de dérivation de prélèvement 8 se piquant au point de piquage 20 de la canalisation retour 11. La branche de dérivation de prélèvement 8 alimente le ballon de stockage du dispositif de stockage 7 selon l'invention. Le système comprend une branche de dérivation de distribution 9 se piquant au point de piquage 21 de la canalisation retour 11. La branche de dérivation de distribution 9 assure la connexion fluidique du ballon de stockage avec la canalisation retour 11.

Selon une possibilité illustrée en figure 1, notamment dans le cas où le dispositif de production de froid 1 n'est pas réversible et ne peut produire de la chaleur, le circuit fluidique primaire comprend une connexion fluidique avec un dispositif de production de chaleur 2 tel qu'un réseau de chaleur.

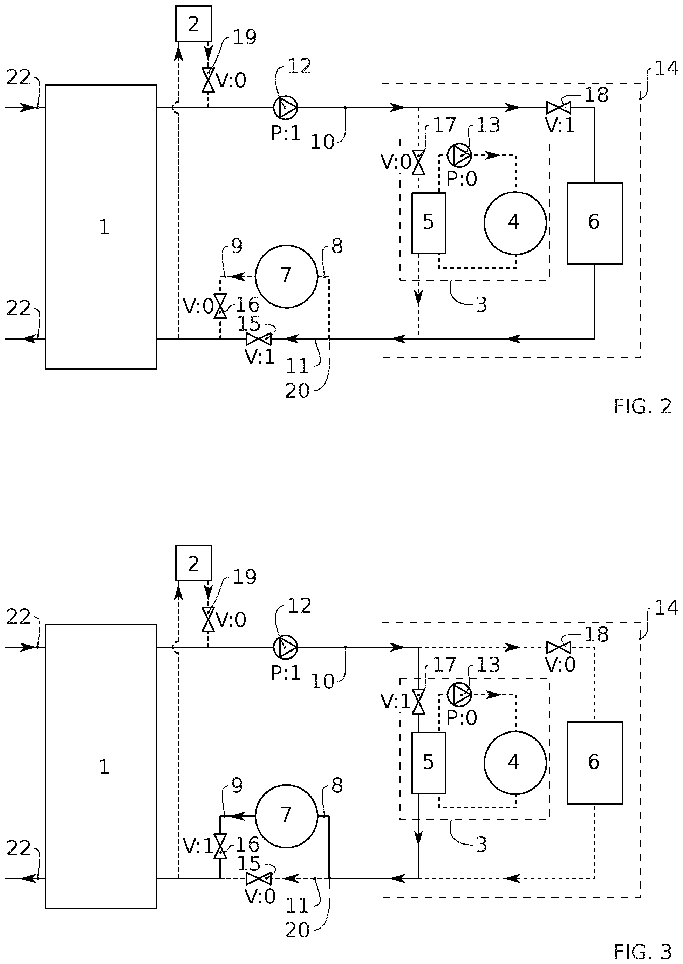

En figure 2, le système selon l'invention fonctionne selon le mode rafraichissement, c'est-à-dire en production de froid. Selon ce mode de fonctionnement, le dispositif de production de froid 1 est en fonctionnement. Le dispositif de production de froid 1 tel qu'une machine à absorption est alimenté en chaleur par une source chaude 22. Le dispositif de production de froid 1 va refroidir le fluide caloporteur circulant dans le circuit fluidique primaire. Le fluide caloporteur ressort du dispositif de production de froid 1 a une température inférieure à celle à laquelle il est rentré dans le dispositif de production de froid 1, par exemple comprise entre 3°C et 11°C. Le fluide caloporteur circule dans la canalisation aller 10 et est mis en circulation par la pompe 12 qui est en fonctionnement et avantageusement agencée sur la canalisation aller 10. L'éventuelle connexion au dispositif de production de chaleur 2 est fermée par la fermeture d'une vanne 19 agencée sur l'éventuelle connexion fluidique avec la canalisation aller 10. La canalisation aller 10 est connectée fluidiquement avec le module d'échange thermique 6 par une vanne 18 agencée en amont du module d'échange thermique 6 sur la canalisation aller 10 qui est ouverte. La canalisation aller 10 n'est pas connectée fluidiquement avec le module d'ECS 3, une vanne 17 agencée en amont du module d'ECS 3 sur la canalisation 10 étant fermée. Dans ce mode de fonctionnement, le dispositif de stockage 7 n'est pas connecté fluidiquement avec le circuit fluidique primaire grâce à une vanne 15 agencée sur la canalisation retour 11 qui est ouverte et une vanne 16 agencée sur la branche de dérivation de distribution 9 qui est fermée.

Le fluide caloporteur circulant dans la canalisation aller 10 débouche dans le module d'échange thermique 6 par la vanne 18 ouverte. Le fluide caloporteur récupère les calories d'un fluide caloporteur secondaire circulant dans un réseau secondaire permettant son refroidissement. Le refroidissement du fluide caloporteur secondaire permet le transport de frigories vers des appareils de climatisation dans un bâtiment appelés émetteur. Le fluide caloporteur ressort du module d'échange thermique 6 par la canalisation retour 11 à une température supérieure à celle à laquelle il est entré dans le module d'échange thermique 6. Le fluide caloporteur circule dans la canalisation retour 11 jusqu'au dispositif de production de froid 1 pour y être à nouveau refroidi. Au niveau de l'émetteur, le radiateur ou le plancher chauffant par exemple fonctionne avec du fluide froid contrairement à la période hivernale lors d'un mode de fonctionnement par production de chaleur pour le chauffage.

Lorsqu'on période de besoin de rafraichissement, il existe également un besoin d'eau chaude sanitaire alors le système doit passer d'un mode de fonctionnement de production de froid à un mode de fonctionnement de production d'eau chaude sanitaire. Le passage d'un mode à l'autre nécessite le passage par une phase de transition illustrée en figure 3.

L'initiation de la phase de transition est contrôlée par l'identification d'un besoin en eau chaude sanitaire. Le mode de production d'eau chaude sanitaire est un mode de fonctionnement classiquement de courte durée relativement au mode de fonctionnement de production de froid. Pendant, le mode de production d'eau chaude sanitaire, l'inertie thermique du bâtiment permet de rendre ce mode de production d'eau chaude sanitaire transparent.

La phase de transition du mode de fonctionnement de production de froid à celui de production d'eau chaude sanitaire est nécessaire pour conserver l'énergie thermique du système et/ou réduire sa consommation énergétique. En effet, lors du mode de fonctionnement pour le rafraichissement, le fluide caloporteur circule à une température de l'ordre de 3°C à 11°C, alors que dans le mode de fonctionnement pour la production d'eau chaude sanitaire, le fluide caloporteur doit être à une température d'entrée dans le module d'ECS 3 proche de 70°C. De plus le mode de fonctionnement de production d'eau chaude sanitaire est un mode intermittent qui est utilisé sur de courtes périodes de besoin au regard du temps d'utilisation du mode de fonctionnement de rafraichissement. En conséquence, il est très utile de conserver le fluide caloporteur froid du mode de fonctionnement de rafraichissement lorsque le système fonctionnera à nouveau en mode rafraichissement.

À titre d'exemple, pour un circuit fluidique primaire comprenant 0,5km de canalisations de 10cm de diamètre, il est nécessaire de prévoir un ballon de stockage d'un volume minimal de 4m³. L'enjeu énergétique si de l'ECS doit réapprovisionner les immeubles 14, 2 fois par jour se calcule de la manière suivante : gain de 4m³ 4 fois par jour : 16m3 de 12°C à 70°C alors 1000kWh peuvent être économisés par jour par le système selon l'invention.

Tel qu'illustré en figure 3, le fluide caloporteur circulant dans le réseau primaire lors du mode de fonctionnement de production de froid va être stocké dans le dispositif de stockage 7 tandis que le fluide caloporteur stocké dans le dispositif de stockage 7 est déstocké et est à une température supérieure à la température du fluide caloporteur qui est stocké.

En fermant la vanne 15 de la canalisation retour 11, le fluide caloporteur en provenance de la canalisation retour 11 est dérivé vers la branche de dérivation de prélèvement 8 pour être stocké dans le ballon de stockage. Le fluide caloporteur stocké dans le ballon de stockage est déstocké, préférentiellement simultanément au stockage du fluide caloporteur froid, en ouvrant la vanne 16 de la branche de dérivation de distribution 9.

En parallèle, la circulation dans le circuit fluidique primaire est modifiée pour assurer la circulation du fluide caloporteur dans le module d'ECS 3 et plus dans le module d'échange thermique 6. La vanne 18 contrôlant l'alimentation du module d'échange thermique 6 en fluide caloporteur est fermée tandis que la vanne 17 contrôlant l'alimentation du module d'ECS 3 est ouverte.

Selon une possibilité, la phase de transition se termine quand la température du fluide caloporteur circulant dans la canalisation retour 11 dépasse une température cible. Selon une autre possibilité, lorsque le ballon de stockage est adapté au volume de fluide caloporteur, la phase de transition se termine quand le ballon de stockage est chargé. Le dispositif de stockage 7 comprend un capteur de niveau permettant d'informer le module de gestion de l'état de chargement du dispositif de stockage qui peut alors contrôler le basculement entre une phase de transition et un mode de fonctionnement et inversement.

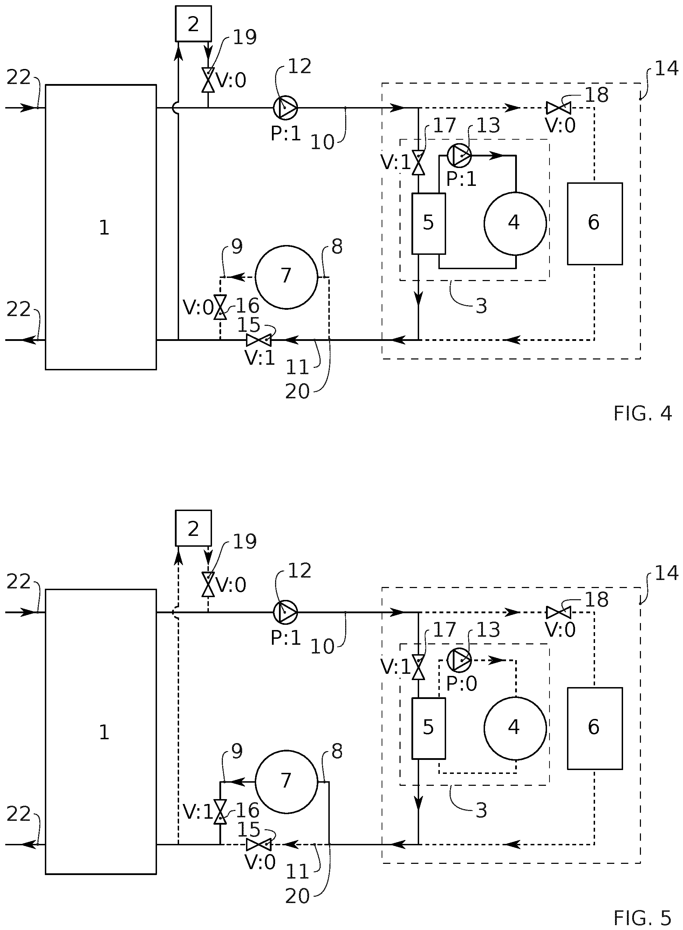

Le mode de fonctionnement en production d'eau chaude sanitaire est illustré à la figure 4. En mode de production d'eau chaude sanitaire, le fluide caloporteur circule dans le réseau primaire.

Selon ce mode de fonctionnement, le dispositif de production de chaleur 2 est en fonctionnement, c'est-à-dire que le dispositif de production de froid 1 est en mode réversible de production de chaleur 2 et/ou un dispositif de production de chaleur 2 est en fonctionnement. Dans le cas d'un dispositif de production de froid réversible 1 et 2 tel qu'une machine à absorption alimentée en chaleur par une source chaude 22, le fluide caloporteur circule dans le réseau primaire et dans le dispositif de production de froid 1, 2. Dans le cas d'un dispositif de production de chaleur 2 indépendant du dispositif de production de froid 1, le fluide caloporteur circule vers le dispositif de production de chaleur 2 par l'ouverture de la vanne 19 et ne circule plus vers le dispositif de production de froid 1. Le dispositif de production de chaleur 2 va chauffer le fluide caloporteur circulant dans le circuit fluidique primaire. Le fluide caloporteur ressort du dispositif de production de chaleur 2 a une température par exemple comprise entre 70 et 110 °C. Le fluide caloporteur circule dans la canalisation aller 10 et est mis en circulation par la pompe 12 qui est en fonctionnement et agencée sur la canalisation aller 10. La canalisation aller 10 est connectée fluidiquement avec le module d'ECS 3 par la vanne 17 agencée sur la canalisation aller 10 qui est ouverte. La canalisation aller 10 n'est pas connectée fluidiquement avec le module d'échange thermique 6, la vanne 18 étant fermée. Dans ce mode de fonctionnement, le dispositif de stockage 7 n'est pas connecté fluidiquement avec le circuit fluidique primaire grâce à une vanne 15 agencée sur la canalisation retour 11 qui est ouverte et une vanne 16 agencée sur la branche de dérivation de distribution 9 qui est fermée.

Le fluide caloporteur circulant dans la canalisation aller 10 débouche dans le module d'ECS 3 par la vanne 17 ouverte. Le fluide caloporteur transfère les calories à l'eau chaude sanitaire circulant dans le module d'eau chaude sanitaire 3. L'eau chaude sanitaire réchauffée dans l'échangeur thermique 5 par le fluide caloporteur est stocké dans un ballon d'eau chaude sanitaire 4. Le fluide caloporteur ressort de l'échangeur thermique 5 par la canalisation retour 11 à une température inférieure à celle à laquelle il est entré dans le module d'ECS 3 tel que par exemple 30°C. Le fluide caloporteur circule dans la canalisation retour 11 jusqu'au dispositif de production de chaleur 2 pour y être à nouveau réchauffé. Le mode de fonctionnement de production d'eau chaude sanitaire est un mode intermittent qui est utilisé pour notamment recharger le ballon d'eau chaude sanitaire 4. Ce mode de fonctionnement peut être mis en place de manière optimisée en fonction des besoins en eau chaude sanitaire et en rafraichissement des bâtiments.

Lorsque le besoin en eau chaude sanitaire disparait ou que le besoin en rafraichissement redevient plus important alors le système doit passer d'un mode de fonctionnement d'eau chaude sanitaire à un mode de fonctionnement de production de froid. Le passage d'un mode à l'autre nécessite le passage par une phase de transition illustrée en figure 5. L'initiation de la phase de transition est contrôlée par l'identification de la fin du besoin en eau chaude sanitaire et/ou un besoin plus important de rafraichissement ou un temps de fonctionnement en mode eau chaude sanitaire dépassé.

La phase de transition du mode de fonctionnement de production d'eau chaude sanitaire à celui de rafraichissement est nécessaire pour conserver l'énergie thermique du système et/ou réduire sa consommation énergétique. En effet, lors du mode de fonctionnement pour le rafraichissement, le fluide caloporteur circule à une température de l'ordre de 3°C à 11°C, alors que dans le mode de fonctionnement pour la production d'eau chaude sanitaire, le fluide caloporteur est à une température d'entrée dans le module d'ECS 3 proche de 70°C. Il est intéressant économiquement de récupérer le fluide caloporteur froid stocké lors du passage au mode de fonctionnement de production d'eau chaude sanitaire pour éviter le besoin de refroidir le fluide caloporteur chaud d'une température de généralement 70°.

Tel qu'illustré en figure 5, le fluide caloporteur circulant dans le réseau primaire lors du mode de fonctionnement d'eau chaude sanitaire va être stocké dans le dispositif de stockage 7 tandis que le fluide caloporteur stocké dans le dispositif de stockage 7 est déstocké et est à une température inférieure à la température du fluide caloporteur qui est stocké.

Le fluide caloporteur circulant dans la canalisation retour 11 est stocké dans le ballon de stockage 7 en fermant la vanne 15 de la canalisation retour 11. Le fluide caloporteur stocké dans le ballon de stockage 7 est déstocké, préférentiellement simultanément au stockage du fluide caloporteur froid, en ouvrant la vanne 16 de la branche de dérivation de distribution 9.

En parallèle, la circulation dans le circuit fluidique primaire est modifiée pour assurer la circulation du fluide caloporteur dans le module d'échange thermique 6 et plus dans le module d'ECS 3. La vanne 18 contrôlant l'alimentation du module d'échange thermique 6 en fluide caloporteur est ouverte tandis que la vanne 17 contrôlant l'alimentation du module d'ECS 3 est fermée.

La phase de transition se termine quand la température du fluide caloporteur circulant dans la canalisation retour 11 passe sous une température cible.

Le système selon l'invention est avantageusement apte à fonctionner en mode de fonctionnement de production de chaleur pour le chauffage.

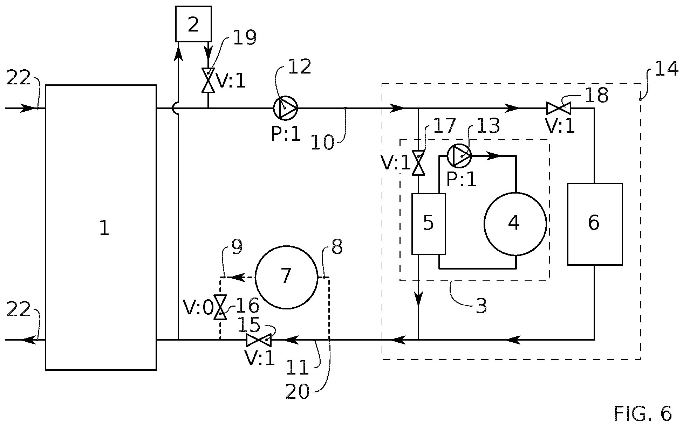

Ce mode de fonctionnement est illustré en figure 6. Le fluide caloporteur circule dans le circuit fluidique primaire entre le dispositif de production de chaleur 2 pouvant être le dispositif de production de froid 1 en mode réversible et/ou un dispositif de production de chaleur 2 propre. Par exemple, le dispositif de production de chaleur 2 indépendant permet de chauffer plus fortement le fluide caloporteur.

Le fluide caloporteur circule dans le dispositif de production de chaleur 2 à titre d'exemple à une température de l'ordre de 40°C. Le fluide caloporteur circule dans la canalisation aller 10 et va alimenter le module d'échange thermique 6 et le module d'eau chaude sanitaire 3, les vannes 17 et 18 contrôlant les alimentations des deux modules sont ouvertes. Le dispositif de stockage 7 n'est pas connecté au circuit fluidique primaire, le fluide caloporteur n'est pas stocké dans le dispositif de stockage.

Selon un mode de réalisation préféré, lorsqu'on période de besoin de production de chaleur, il existe également un besoin d'eau chaude sanitaire alors le système doit passer d'un mode de fonctionnement de production de chaleur à un mode de fonctionnement de production d'eau chaude sanitaire. Le passage d'un mode à l'autre peut nécessiter le passage par une phase de transition non illustrée.

Avantageusement, le passage du mode de production d'eau chaude sanitaire au mode de production de chaleur passe par une phase de transition. En effet, le fluide caloporteur circulant dans le réseau primaire lors du mode de production d'eau chaude sanitaire est couramment à une température supérieure à la température du fluide caloporteur circulant dans le réseau primaire lors du mode de production de chaleur. Cette énergie thermique du fluide caloporteur plus chaud sera avantageusement utilisée lors de la phase de transition entre le mode de production de chaleur et le mode de production d'eau chaude sanitaire.

Selon une possibilité, le passage du mode de production de chaleur au mode production d'eau chaude sanitaire se fait par une phase de transition. La phase de transition permet de déstocker le fluide caloporteur à une température supérieure à celle du fluide caloporteur qui est en cours de stockage.

L'initiation de la phase de transition, entre le mode de production de chaleur et le mode de production d'eau chaude sanitaire, est contrôlée par l'identification d'un besoin en eau chaude sanitaire. Le mode de production d'eau chaude sanitaire est un mode de fonctionnement classiquement de courte durée relativement au mode de fonctionnement de production de chaleur. Pendant, le mode de production d'eau chaude sanitaire, l'inertie thermique du bâtiment permet de rendre ce mode de production d'eau chaude sanitaire transparent.

La phase de transition du mode de fonctionnement de production de chaleur à celui de production d'eau chaude sanitaire est énergétiquement intéressante pour récupérer l'énergie thermique du système et/ou réduire sa consommation énergétique en fonction des températures de fonctionnement du fluide caloporteur dans ces deux modes de fonctionnement.

La phase de transition entre le mode de production de chaleur et le mode de production d'eau chaude sanitaire comprend le stockage du fluide caloporteur chaud circulant dans le circuit fluidique primaire dans le dispositif de stockage 7 tandis que le fluide caloporteur stocké dans le dispositif de stockage 7 est déstocké. Le fluide caloporteur déstocké est à une température supérieure à la température du fluide caloporteur qui est en cours de stockage. Cela permet ainsi de remettre en circulation un fluide caloporteur de température plus élevée que celle du fluide caloporteur circulant précédemment. Le fluide caloporteur déstocké est plus près de la température cible pour le mode de production d'eau chaude sanitaire, classiquement au moins 70°C, ce qui limite le besoin de chauffer ce fluide caloporteur et donc réduit la consommation énergétique du système.

Selon une possibilité, la phase de transition se termine quand la température du fluide caloporteur circulant dans la canalisation retour 11 dépasse une température cible. Selon une autre possibilité, lorsque le ballon de stockage est adapté au volume de fluide caloporteur, la phase de transition se termine quand le ballon de stockage est chargé. Le dispositif de stockage 7 comprend un capteur de niveau permettant d'informer le module de gestion de l'état de chargement du dispositif de stockage qui peut alors contrôler le basculement entre une phase de transition et un mode de fonctionnement et inversement.

Le mode de production d'eau chaude sanitaire peut ensuite se mettre en route et correspond alors à la figure 4.

Lorsque le besoin en eau chaude sanitaire prend fin, le système passe du mode de production d'eau chaude sanitaire vers le mode de production de chaleur.

Avantageusement, le passage du mode de production d'eau chaude sanitaire au mode de production de chaleur passe par une phase de transition. En effet, le fluide caloporteur circulant dans le mode de production d'eau chaude sanitaire est à une température supérieure à la température du fluide caloporteur dans le mode de production de chaleur. Cette énergie thermique sera avantageusement utilisée lors de la phase de transition entre le mode de production de chaleur et le mode de production d'eau chaude sanitaire.

L'initiation de la phase de transition est contrôlée par la fin de l'identification d'un besoin en eau chaude sanitaire.

La phase de transition du mode de fonctionnement de production d'eau chaude sanitaire à celui de production chaleur est énergétiquement intéressante pour récupérer l'énergie thermique du système et/ou réduire sa consommation énergétique en fonction des températures de fonctionnement du fluide caloporteur dans ces deux modes de fonctionnement.

La phase de transition entre le mode de production d'eau chaude sanitaire et le mode de production de chaleur comprend le stockage du fluide caloporteur chaud circulant dans le circuit fluidique primaire dans le dispositif de stockage 7 tandis que le fluide caloporteur stocké dans le dispositif de stockage 7 est déstocké. Le fluide caloporteur déstocké est à une température inférieure à la température du fluide caloporteur qui est en cours de stockage.

Selon une possibilité, la phase de transition se termine quand la température du fluide caloporteur circulant dans la canalisation retour 11 dépasse une température cible. Selon une autre possibilité, lorsque le ballon de stockage est adapté au volume de fluide caloporteur, la phase de transition se termine quand le ballon de stockage est chargé. Le dispositif de stockage 7 comprend un capteur de niveau permettant d'informer le module de gestion de l'état de chargement du dispositif de stockage qui peut alors contrôler le basculement entre une phase de transition et un mode de fonctionnement et inversement.

Classiquement, le mode de fonctionnement de production de froid correspond à l'été tandis que le mode de fonctionnement de production de chaleur correspond à l'hiver.

### LISTE DES REFERENCES

- 1.: Dispositif de production de froid
- 2.: Dispositif de production de chaleur
- 3.: Module d'eau chaude sanitaire
- 4.: Ballon d'eau chaude sanitaire
- 5.: Echangeur thermique
- 6.: Module d'échange thermique
- 7.: Ballon de stockage thermique
- 8.: Branche de dérivation de prélèvement
- 9.: Branche de dérivation de distribution
- 10.: Canalisation d'aller
- 11.: Canalisation de retour
- 12.: pompe
- 13.: Pompe
- 14.: Immeuble ou sous-station
- 15.: Vanne
- 16.: Vanne
- 17.: Vanne
- 18.: Vanne
- 19.: Vanne
- 20.: Piquage
- 21.: Piquage
- 101.: Canalisation aller de dérivation
- 102.: Canalisation aller de dérivation
- 111.: Canalisation retour de dérivation
- 112.: Canalisation retour de dérivation

## Revendications

1. Système de production de chaleur et de froid configuré pour assurer alternativement la production de froid, la production de de chaleur et la production d'eau chaude sanitaire comprenant un réseau primaire comprenant :
- Un dispositif de production de froid (1),
- Un dispositif de production de chaleur (2),
- Un circuit fluidique primaire apte à recevoir un fluide caloporteur et configuré pour relier fluidiquement le dispositif de production de froid (1), le dispositif de production de chaleur (2), le module d'eau chaude sanitaire (3) et le module d'échange thermique (6),,
- Un module d'eau chaude sanitaire (ECS) (3),
- Un module d'échange thermique (6) assurant le transfert thermique entre un émetteur et le fluide caloporteur apte à circuler dans le réseau primaire,
- un dispositif de stockage (7) du fluide caloporteur du circuit fluidique primaire,
**Caractérisé en ce que**
le dispositif de stockage (7) du fluide caloporteur du circuit fluidique primaire est agencé en dérivation sur le circuit fluidique primaire et est configuré pour stocker le fluide caloporteur du circuit fluidique primaire lors d'une transition entre la production d'eau chaude sanitaire et la production de froid ou de chaleur.

2. Système selon la revendication précédente dans lequel le dispositif de stockage (7) est un ballon de stockage thermique thermocline.

3. Système selon la revendication précédente dans lequel le dispositif de stockage (7) comprend une entrée de fluide caloporteur chaud en partie supérieure du ballon de stockage, une entrée de fluide caloporteur froid en partie inférieure du ballon de stockage, une sortie de fluide caloporteur chaud en partie supérieure du ballon de stockage, une sortie de fluide caloporteur froid en partie inférieure.

4. Système selon l'une quelconque des revendications précédentes dans lequel le dispositif de stockage (7) est configuré pour permettre le stockage du volume du circuit fluidique primaire.

5. Système selon l'une quelconque des revendications précédentes dans lequel le dispositif de stockage (7) comprend une branche de dérivation de prélèvement (8) du fluide caloporteur agencée sur le circuit fluidique primaire, et une branche de dérivation de distribution (9) du fluide caloporteur agencée sur le circuit fluidique primaire en aval de la branche de dérivation de prélèvement (8).

6. Système selon l'une quelconque des revendications précédentes dans lequel le dispositif de production de froid (1) est configuré pour être réversible de sorte à produire de la chaleur.

7. Système selon l'une quelconque des revendications précédentes dans lequel le circuit de fluidique comprend au moins une canalisation aller (10) configurée pour transporter le fluide caloporteur depuis le dispositif de production de froid (1) et/ou de chaleur (2) vers le module d'eau chaude sanitaire (3) et/ou vers le module d'échange thermique (6) et au moins une canalisation retour (11) configurée pour transporter le fluide caloporteur depuis le module d'eau chaude sanitaire (3) et/ou depuis le module d'échange thermique (6) vers le dispositif de production de froid (1) et/ou de chaleur (2), le dispositif de stockage (7) étant agencé en dérivation d'une canalisation retour (11) du circuit de fluidique.

8. Système selon l'une quelconque des revendications précédentes dans lequel le module d'eau chaude sanitaire (ECS)(3), comprend un ballon d'eau chaude sanitaire (4) et un échangeur thermique (5) assurant le transfert thermique entre le fluide caloporteur circulant dans le circuit fluidique primaire et l'eau chaude sanitaire.

9. Système selon l'une quelconque des revendications précédentes comprenant un module de gestion des flux du fluide caloporteur dans le réseau primaire.

10. Système selon la revendication précédente dans lequel le module de gestion comprend des vannes (15, 16, 17,18, 19) agencées sur le réseau primaire, des capteurs de températures configurés pour mesurer la température du fluide caloporteur dans le réseau primaire et/ou un module de temporisation configuré pour optimiser les transitions.

11. Procédé de gestion d'un système selon l'une quelconque des revendications précédentes comprenant les modes de fonctionnement suivants :
Un mode de production de froid configuré pour fournir un fluide caloporteur froid au module d'échange thermique (6) assurant un rafraichissement de l'émetteur,
Un mode de production d'eau chaude sanitaire (3) configuré pour fournir un fluide caloporteur chaud au module d'eau chaude sanitaire (3),
Un mode de production de chaleur configuré pour fournir un fluide caloporteur chaud
au module d'échange thermique (6) assurant un chauffage de l'émetteur,
**Caractérisé en ce qu'**il comprend
une phase de transition entre le mode de production de froid et le mode de production d'eau chaude sanitaire comprenant le stockage du fluide caloporteur froid circulant dans le circuit fluidique primaire dans le dispositif de stockage (7) et le déstockage du fluide caloporteur stocké dans le dispositif de stockage (7) de température supérieure à celle du fluide de caloporteur en cours de stockage dans le dispositif de stockage (7), et
une phase de transition entre le mode de production d'eau chaude sanitaire et le mode de production de froid comprenant le stockage du fluide caloporteur chaud circulant dans le circuit fluidique primaire dans le dispositif de stockage (7) et le déstockage du fluide caloporteur froid stocké dans le dispositif de stockage (7).

12. Procédé selon la revendication précédente comprenant Une phase de transition entre le mode de production de froid et le mode de production de chaleur comprenant le stockage du fluide caloporteur froid circulant dans le circuit fluidique primaire dans le dispositif de stockage (7) et le déstockage du fluide caloporteur stocké dans le dispositif de stockage (7) de température supérieure à celle du fluide de stockage en cours de stockage dans le dispositif de stockage (7), et Une phase de transition entre le mode de production de chaleur et le mode de production de froid comprenant le stockage du fluide caloporteur chaud circulant dans le circuit fluidique primaire dans le dispositif de stockage (7) et le déstockage du fluide caloporteur froid stocké dans le dispositif de stockage (7).

13. Procédé selon l'une quelconque des deux revendications précédentes comprenant
une phase de transition entre le mode de production de chaleur et le mode de production d'eau chaude sanitaire (3) comprenant le stockage du fluide caloporteur chaud circulant dans le circuit fluidique primaire dans le dispositif de stockage (7) et le déstockage du fluide caloporteur stocké dans le dispositif de stockage (7) de température supérieure à celle du fluide de stockage en cours de stockage dans le dispositif de stockage (7), et
une phase de transition entre le mode de production d'eau chaude sanitaire (3) et le mode de production de chaleur comprenant le stockage du fluide caloporteur chaud circulant dans le circuit fluidique primaire dans le dispositif de stockage (7) et le déstockage du fluide caloporteur stocké dans le dispositif de stockage de température inférieure à celle du fluide de stockage (7) en cours de stockage dans le dispositif de stockage (7).

## Patentansprüche

1. Wärme- und Kälteerzeugungssystem, das so konfiguriert ist, dass es abwechselnd die Erzeugung von Kälte, die Erzeugung von Wärme und die Erzeugung von Brauchwarmwasser ermöglicht, umfassend ein primäres Netz, das Folgendes umfasst:
- eine Kälteerzeugungsvorrichtung (1),
- eine Wärmeerzeugungsvorrichtung (2),
- einen primären Fluidkreislauf, der dazu fähig ist, ein Wärmeträgerfluid aufzunehmen, und der so konfiguriert ist, dass er die Kälteerzeugungsvorrichtung (1), die Wärmeerzeugungsvorrichtung (2), das Brauchwarmwassermodul (3) und das Wärmeaustauschmodul (6) fluidisch verbindet,
- ein Brauchwarmwassermodul (BWM) (3),
- ein Wärmeaustauschmodul (6), das die Wärmeübertragung zwischen einem Strahler und dem Wärmeträgerfluid, das dazu fähig ist, im primären Netz zu zirkulieren, ermöglicht,
- eine Speichervorrichtung (7) für das Wärmeträgerfluid des primären Fluidkreislaufs,
**dadurch gekennzeichnet, dass**
die Speichervorrichtung (7) für das Wärmeträgerfluid des primären Fluidkreislaufs in einem Bypass am primären Fluidkreislauf angeordnet und so konfiguriert ist, dass sie das Wärmeträgerfluid des primären Fluidkreislaufs bei einem Übergang von der Erzeugung von Brauchwarmwasser zur Erzeugung von Kälte oder Wärme speichert.

2. System nach dem vorhergehenden Anspruch, bei dem die Speichervorrichtung (7) ein Thermokline-Wärmespeicherbehälter ist.

3. System nach dem vorhergehenden Anspruch, bei dem die Speichervorrichtung (7) einen Einlass für warmes Wärmeträgerfluid im oberen Teil des Speicherbehälters, einen Einlass für kaltes Wärmeträgerfluid im unteren Teil des Speicherbehälters, einen Auslass für warmes Wärmeträgerfluid im oberen Teil des Speicherbehälters und einen Auslass für kaltes Wärmeträgerfluid im unteren Teil umfasst.

4. System nach einem der vorhergehenden Ansprüche, bei dem die Speichervorrichtung (7) so konfiguriert ist, dass sie die Speicherung des Volumens des primären Fluidkreislaufs gestattet.

5. System nach einem der vorhergehenden Ansprüche, bei dem die Speichervorrichtung (7) einen Bypass-Entnahmezweig (8) für das Wärmeträgerfluid umfasst, der am primären Fluidkreislauf angeordnet ist, und einen Bypass-Verteilungszweig (9) für das Wärmeträgerfluid, der am primären Fluidkreislauf nach dem Bypass-Entnahmezweig (8) angeordnet ist.

6. System nach einem der vorhergehenden Ansprüche, bei dem die Kälteerzeugungsvorrichtung (1) so konfiguriert ist, dass sie reversibel ist, um Wärme zu erzeugen.

7. System nach einem der vorhergehenden Ansprüche, bei dem der Fluidkreislauf mindestens eine Zulaufleitung (10) umfasst, die so konfiguriert ist, dass sie das Wärmeträgerfluid von der Kälte- (1) und/oder der Wärmeerzeugungsvorrichtung (2) zum Brauchwarmwassermodul (3) und/oder zum Wärmeaustauschmodul (6) transportiert, und mindestens eine Rücklaufleitung (11), die so konfiguriert ist, dass sie das Wärmeträgerfluid vom Brauchwarmwassermodul (3) und/oder vom Wärmeaustauschmodul (6) zur Kälte- (1) und/oder zur Wärmeerzeugungsvorrichtung (2) transportiert, wobei die Speichervorrichtung (7) in einem Bypass der Rücklaufleitung (11) des primären Fluidkreislaufs angeordnet ist.

8. System nach einem der vorhergehenden Ansprüche, bei dem das Brauchwarmwassermodul (BWM) (3) einen Brauchwarmwasserbehälter (4) und einen Wärmetauscher (5) umfasst, der die Wärmeübertragung zwischen dem im primären Fluidkreislauf zirkulierenden Wärmeträgerfluid und dem Brauchwarmwasser ermöglicht.

9. System nach einem der vorhergehenden Ansprüche, umfassend ein Steuermodul für den Wärmeträgerfluidfluss im primären Netz.

10. System nach dem vorhergehenden Anspruch, bei dem das Steuermodul Ventile (15, 16, 17, 18, 19), die im primären Netz angeordnet sind, Temperatursensoren, die so konfiguriert sind, dass sie die Temperatur des Wärmeträgerfluids im primären Netz messen, und/oder ein Zeitgebermodul umfasst, das so konfiguriert ist, dass es die Übergänge optimiert.

11. Steuerverfahren für ein System nach einem der vorhergehenden Ansprüche, umfassend die folgenden Betriebsmodi:
einen Kälteerzeugungsmodus, der so konfiguriert ist, dass er dem Wärmetauschmodul (6) ein kaltes Wärmeträgerfluid zuführt, das die Kühlung des Strahlers ermöglicht,
einen Brauchwarmwassererzeugungsmodus (3), der so konfiguriert ist, dass er dem Brauchwarmwassermodul (3) ein warmes Wärmeträgerfluid zuführt,
einen Wärmeerzeugungsmodus, der so konfiguriert ist, dass er dem Wärmetauschmodul (6) ein warmes Wärmeträgerfluid zuführt, das die
Erwärmung des Strahlers ermöglicht,
**dadurch gekennzeichnet, dass** es Folgendes umfasst
eine Übergangsphase zwischen dem Kälteerzeugungsmodus und dem Brauchwarmwassererzeugungsmodus, die die Speicherung des im primären Fluidkreislauf zirkulierenden kalten Wärmeträgerfluids in der Speichervorrichtung (7) und die Entnahme des in der Speichervorrichtung (7) gespeicherten Wärmeträgerfluids bei einer Temperatur umfasst, die höher ist als die des Wärmeträgerfluids bei der Speicherung in der Speichervorrichtung (7), und
eine Übergangsphase zwischen dem Brauchwarmwassererzeugungsmodus und dem Kälteerzeugungsmodus, die die Speicherung des im primären Fluidkreislauf zirkulierenden warmen Wärmeträgerfluids in der Speichervorrichtung (7) und die Entnahme des in der Speichervorrichtung (7) gespeicherten kalten Wärmeträgerfluids.

12. Verfahren nach dem vorhergehenden Anspruch, umfassend
eine Übergangsphase zwischen dem Kälteerzeugungsmodus und dem Wärmeerzeugungsmodus, umfassend die Speicherung des im primären Fluidkreislauf zirkulierenden kalten Wärmeträgerfluids in der Speichervorrichtung (7) und die Entnahme des in der Speichervorrichtung (7) gespeicherten Wärmeträgerfluids bei einer Temperatur, die höher ist als die des Wärmeträgerfluids bei der Speicherung in der Speichervorrichtung (7), und
eine Übergangsphase zwischen dem Wärmeerzeugungsmodus und dem Kälteerzeugungsmodus, umfassend die Speicherung des im primären Fluidkreislauf zirkulierenden warmen Wärmeträgerfluids in der Speichereinrichtung (7) und die Entnahme des in der Speichervorrichtung (7) gespeicherten kalten Wärmeträgerfluids.

13. Verfahren nach einem der beiden vorhergehenden Ansprüche, umfassend
eine Übergangsphase zwischen dem Wärmeerzeugungsmodus und dem Brauchwarmwassererzeugungsmodus (3), die die Speicherung des im primären Fluidkreislauf zirkulierenden warmen Wärmeträgerfluids in der Speichervorrichtung (7) und die Entnahme des in der Speichervorrichtung (7) gespeicherten Wärmeträgerfluids bei einer Temperatur umfasst, die höher ist als die des Wärmeträgerfluids bei der Speicherung in der Speichervorrichtung (7), und
eine Übergangsphase zwischen dem Brauchwarmwassererzeugungsmodus (3) und dem Wärmeerzeugungsmodus, die die Speicherung des im primären Fluidkreislauf zirkulierenden warmen Wärmeträgerfluids in der Speichervorrichtung (7) und die Entnahme des in der Speichervorrichtung gespeicherten Wärmeträgerfluids bei einer Temperatur umfasst, die geringer ist als die der Speichervorrichtung (7) bei der Speicherung in der Speichervorrichtung (7).

## Claims

1. System for producing heat and cold configured to alternatingly ensure the production of cold, the production of heat and the production of domestic hot water comprising a primary network comprising:
- a device for producing cold (1),
- a device for producing heat (2),
- a primary fluid circuit capable of receiving a heat transfer fluid and configured to fluidly connect the device for producing cold (1), the device for producing heat (2), the domestic hot water module (3) and the heat exchange module (6),
- a domestic hot water (DHW) module (3),
- a heat exchange module (6) ensuring the thermal transfer between an emitter and the heat transfer fluid capable of circulating in the primary network,
- a device (7) for storing the heat transfer fluid of the primary fluid circuit,
**characterised in that**
the device (7) for storing the heat transfer fluid of the primary fluid circuit is arranged as a bypass on the primary fluid circuit and is configured to store the heat transfer fluid of the primary fluid circuit during a transition between the production of domestic hot water and the production of heat or of cold.

2. System according to the preceding claim wherein the storage device (7) is a thermocline thermal storage tank.

3. System according to the preceding claim wherein the storage device (7) comprises an inlet for hot heat transfer fluid in the upper part of the storage tank, an inlet for cold heat transfer fluid in the lower part of the storage tank, an outlet for hot heat transfer fluid in the upper part of the storage tank, an outlet for cold heat transfer fluid in the lower part.

4. System according to any one of the preceding claims wherein the storage device (7) is configured to allow the storage of the volume of the primary fluid circuit.

5. System according to any one of the preceding claims wherein the storage device (7) comprises a bypass branch (8) for drawing off the heat transfer fluid arranged on the primary fluid circuit, and a bypass branch (9) for dispensing the heat transfer fluid arranged on the primary fluid circuit downstream of the bypass branch (8) for drawing off.

6. System according to any one of the preceding claims wherein the device for producing cold (1) is configured to be reversible so as to produce heat.

7. System according to any one of the preceding claims wherein the fluid circuit comprises at least one outgoing pipe (10) configured to transport the heat transfer fluid from the device for producing cold (1) and/or heat (2) to the domestic hot water module (3) and/or to the heat exchange module (6) and at least one return pipe (11) configured to transport the heat transfer fluid from the domestic hot water module (3) and/or from the heat exchange module (6) to the device for producing cold (1) and/or heat (2), the storage device (7) being arranged as a bypass of a return pipe (11) of the fluid circuit.

8. System according to any one of the preceding claims wherein the domestic hot water (DHW) module (3) comprises a domestic hot water tank (4) and a heat exchanger (5) ensuring the thermal transfer between the heat transfer fluid circulating in the primary fluid circuit and the domestic hot water.

9. System according to any one of the preceding claims comprising a module for managing the flows of heat transfer fluid in the primary network.

10. System according to the preceding claim wherein the management module comprises valves (15, 16, 17, 18, 19) arranged on the primary network, temperature sensors configured to measure the temperature of the heat transfer fluid in the primary network and/or a delay module configured to optimise the transitions.

11. Method for managing a system according to any one of the preceding claims comprising the following operating modes:
a mode for producing cold configured to provide a cold heat transfer fluid to the heat exchange module (6) ensuring a cooling of the emitter,
a mode for producing domestic hot water (3) configured to provide a hot heat transfer fluid to the domestic hot water module (3),
a mode for producing heat configured to provide a hot heat transfer fluid to the
heat exchange module (6) ensuring a heating of the emitter,
**characterised in that** it comprises
a phase of transition between the mode for producing cold and the mode for producing domestic hot water comprising the storage of the cold heat transfer fluid circulating in the primary fluid circuit in the storage device (7) and the removal from storage of the heat transfer fluid stored in the storage device (7) having a temperature higher than that of the heat transfer fluid being stored in the storage device (7), and
a phase of transition between the mode for producing domestic hot water and
the mode for producing cold comprising the storage of the hot heat transfer fluid circulating in the primary fluid circuit in the storage device (7) and the removal from storage of the cold heat transfer fluid stored in the storage device (7).

12. Method according to the preceding claim comprising
a phase of transition between the mode for producing cold and the mode for producing heat comprising the storage of the cold heat transfer fluid circulating in the primary fluid circuit in the storage device (7) and the removal from storage of the heat transfer fluid stored in the storage device (7) having a temperature higher than that of the storage fluid being stored in the storage device (7), and
a phase of transition between the mode for producing heat and the mode for producing cold comprising the storage of the hot heat transfer fluid circulating in the primary fluid circuit in the storage device (7) and the removal from storage of the cold heat transfer fluid stored in the storage device (7).

13. Method according to any one of the two preceding claims comprising
a phase of transition between the mode for producing heat and the mode for producing domestic hot water (3) comprising the storage of the hot heat transfer fluid circulating in the primary fluid circuit in the storage device (7) and the removal from storage of the heat transfer fluid stored in the storage device (7) having a temperature higher than that of the storage fluid being stored in the storage device (7), and
a phase of transition between the mode for producing domestic hot water (3) and the mode for producing heat comprising the storage of the hot heat transfer fluid circulating in the primary fluid circuit in the storage device (7) and the removal from storage of the heat transfer fluid stored in the storage device having a temperature lower than that of the storage fluid (7) being stored in the storage device (7).
